# EUROPEAN PATENT SPECIFICATION

(11) **EP 4 664 869 B1**
(45) Date of publication and mention of the grant of the patent: **29.07.2026**
(21) Application number: 23921390.3
(22) Date of filing: 25.12.2023
(51) Int. Cl.: H04W 4/14, H04W 8/22, H04M 1/72, H04M 11/00, H04W 24/04, H04L 9/40

(54) **INFORMATION TERMINAL, INFORMATION PROCESSING DEVICE, INFORMATION PROCESSING METHOD, AND PROGRAM**
INFORMATIONSENDGERÄT, INFORMATIONSVERARBEITUNGSVORRICHTUNG, INFORMATIONSVERARBEITUNGSVERFAHREN UND PROGRAMM
TERMINAL D'INFORMATIONS, DISPOSITIF DE TRAITEMENT D'INFORMATIONS, PROCÉDÉ DE TRAITEMENT D'INFORMATIONS ET PROGRAMME

(30) Priority: 07.02.2023 JP 2023016516
(43) Date of publication of application: 17.12.2025
(73) Proprietor: Panasonic Intellectual Property Management Co., Ltd., Kadoma-shi, Osaka 571-0057 (JP)
(72) Inventor: TSUTSUI, Tomoaki, Kadoma-shi, Osaka 571-0057 (JP); YAMAMOTO, Masaya, Kadoma-shi, Osaka 571-0057 (JP); ODA, Tomohiro, Kadoma-shi, Osaka 571-0057 (JP); UJIIE, Yoshihiro, Kadoma-shi, Osaka 571-0057 (JP); HIRAISHI, Rikiya, Kadoma-shi, Osaka 571-0057 (JP); HAGA, Tomoyuki, Kadoma-shi, Osaka 571-0057 (JP)
(74) Representative: Grünecker Patent- und Rechtsanwälte PartG mbB
(86) International application number: PCT/JP2023/046484
(87) International publication number: WO 2024/166572

(56) References cited:
- WO-A1-2011/023097
- WO-A1-2013/024553
- JP-A- 2006 217 293
- JP-A- 2006 229 617
- JP-A- 2018 032 956
- US-A1- 2016 309 527
- US-B1- 9 913 125

## Description

### [Technical Field]

The present disclosure relates to an information terminal, an information processing device, an information processing method, and a program.

### [Background Art]

Conventionally, there have been Internet of Things (IoT) devices that perform, for example, communication over a cellular communication network (see, for example, Patent Literature (PTL) 1).

The terminal device disclosed in PTL 1 determines, when receiving identification information for selecting a network suitable for establishing connection to Internet Protocol (IP) Multimedia Subsystem (IMS) communication service from a core network or IMS, whether to establish connection to the IMS communication service over the core network to which such terminal device is connected or over another core network.

Patent Literature 2 to 4 disclose techniques for controlling or restricting packet data communication in a cellular communication network based on network-side control, subscription status, or session management, while maintaining signalling or service continuity.

### [Citation List]

### [Patent Literature]

[PTL 1] Japanese Unexamined Patent Application Publication No. 2019-62443
[PTL 2] US Patent No. 9,913,125
[PTL 3] US Patent Application Publication No. 2016/0309527
[PTL 4] WO2011/023097 $

### [Summary of Invention]

### [Technical Problem]

When a communication-capable device such as an IoT device is maliciously used as a jump server for spreading viruses to other devices due to virus infection, for example, there is a possibility that data such as viruses will be transmitted to other devices, causing a secondary damage. On the other hand, when the communication function is stopped, it is difficult to notify a user of the anomaly in the case where such user is the type of person who does not frequently check his/her information terminal.

The present disclosure provides an information terminal and so forth capable of reducing the occurrence of a secondary damage attributable to communication performed by the information terminal and facilitating the notification of an operational status of the information terminal.

### [Solution to Problem]

An information terminal according to an aspect of the present disclosure is an information terminal that performs communication over a cellular communication network, the information terminal including: a communication disconnector that disconnects communication that is performed over a data communication network in the cellular communication network by deleting Access Point Name (APN) setting, when an anomaly of the information terminal is detected; and a communication controller that transmits operational information indicating an operational status of the information terminal over a voice communication network in the cellular communication network, after the communication over the data communication network is disconnected.

An information processing device according to an aspect of the present disclosure is an information processing device including: a controller that transmits a deletion command to an information terminal that performs communication over a cellular communication network, when an anomaly of the information terminal is detected, the deletion command being a command for disconnecting communication that is performed over a data communication network in the cellular communication network by deleting Access Point Name (APN) setting; and a notifier that provides notification about anomaly information related to the anomaly of the information terminal, based on operational information that is transmitted from the information terminal over a voice communication network in the cellular communication network and indicates an operational status of the information terminal, when the operational information is received after the deletion command is transmitted.

An information processing method according to an aspect of the present disclosure is an information processing method performed by an information terminal that performs communication over a cellular communication network, the information processing method including: disconnecting communication that is performed over a data communication network in the cellular communication network by deleting Access Point Name (APN) setting, when an anomaly of the information terminal is detected; and transmitting operational information indicating an operational status of the information terminal over a voice communication network in the cellular communication network, after the communication over the data communication network is disconnected.

A program according to an aspect of the present disclosure is a program for causing a computer to execute the information processing method performed by the information terminal described above.

An information processing method according to an aspect of the present disclosure is an information processing method performed by an information processing device, the information processing method including: transmitting a deletion command to an information terminal that performs communication over a cellular communication network, when an anomaly of the information terminal is detected, the deletion command being a command for disconnecting communication that is performed over a data communication network in the cellular communication network by deleting Access Point Name (APN) setting; and providing notification about anomaly information related to the anomaly of the information terminal, based on operational information that is transmitted from the information terminal over a voice communication network in the cellular communication network and indicates an operational status of the information terminal, when the operational information is received after the deletion command is transmitted.

A program according to an aspect of the present disclosure is a program for causing a computer to execute the information processing method performed by the information processing device described above.

### [Advantageous Effects of Invention]

According to the present disclosure, it is possible to provide an information terminal and so forth capable of reducing the occurrence of a secondary damage attributable to communication performed by the information terminal and facilitating the notification of an operational status of the information terminal.

### [Brief Description of Drawings]

[FIG. 1]

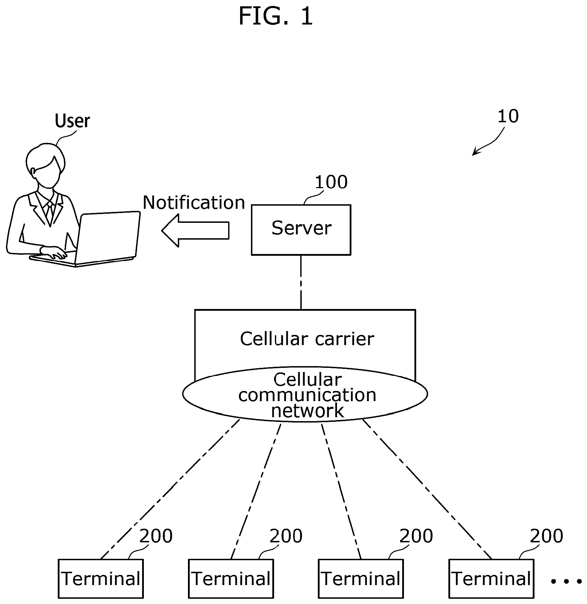

   FIG. 1 is a diagram showing the configuration of an information processing system according to an embodiment.
[FIG. 2]

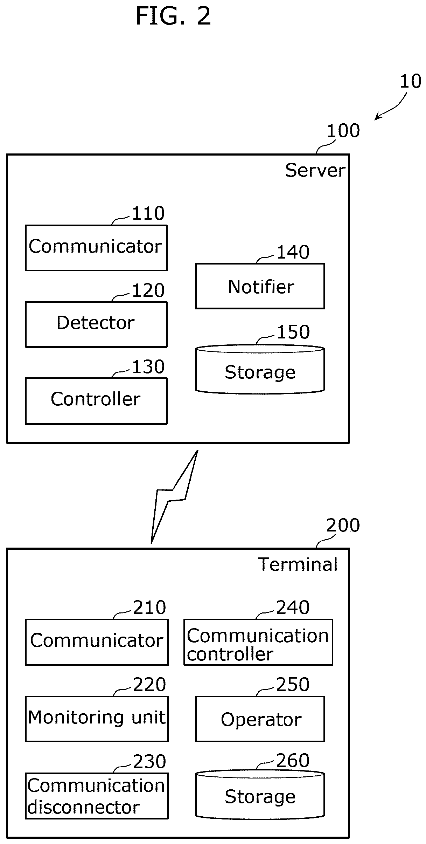

   FIG. 2 is a block diagram showing the functional configuration of the information processing system according to the embodiment.
[FIG. 3]

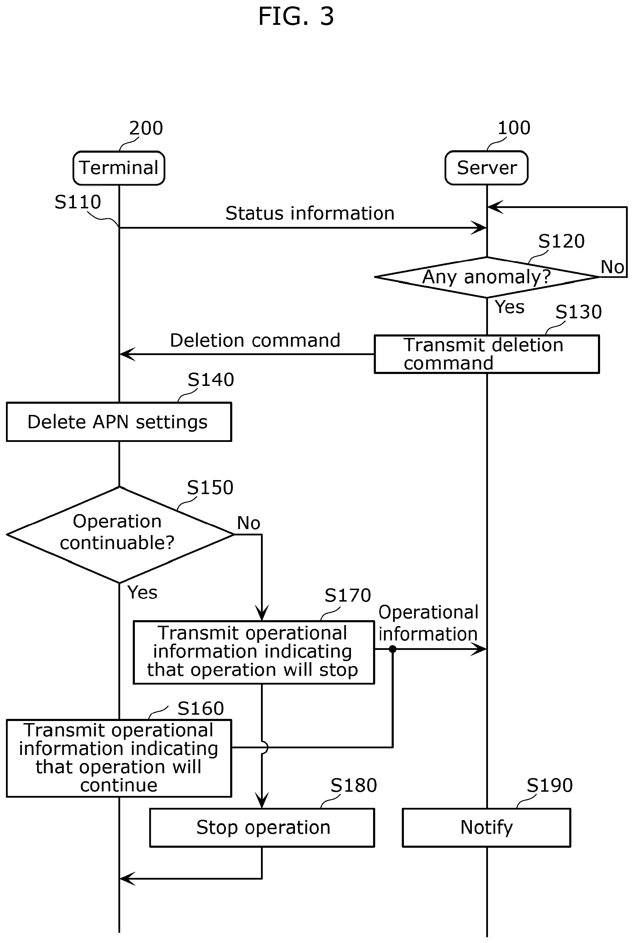

   FIG. 3 is a sequence diagram showing the processing procedure of the information processing system according to the embodiment.
[FIG. 4]

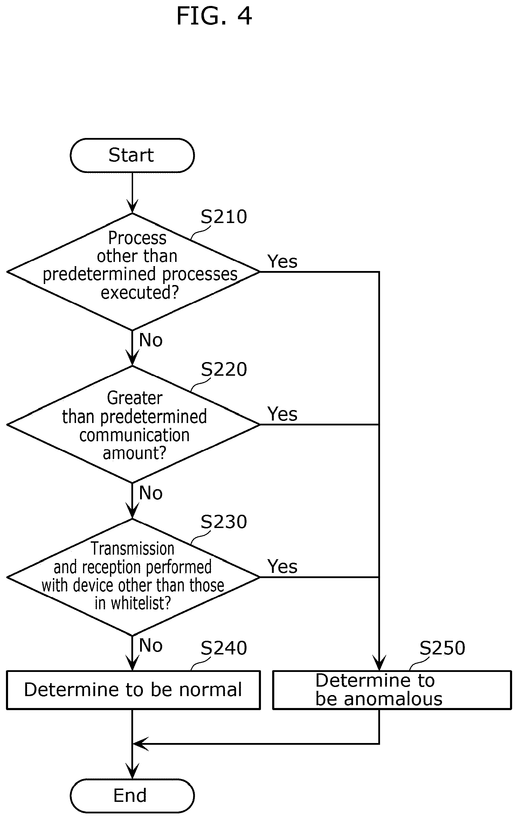

   FIG. 4 is a flowchart showing the processing procedure of anomaly detection processing performed by a detector according to the embodiment.
[FIG. 5]

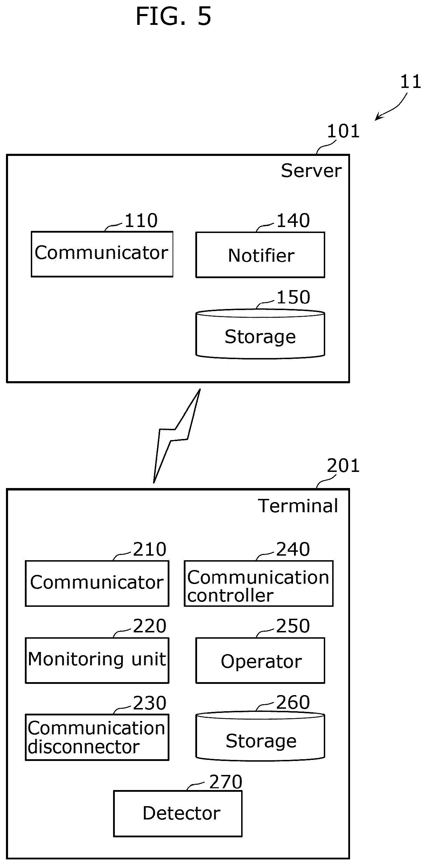

   FIG. 5 is a block diagram showing the functional configuration of an information processing system according to a variation of the embodiment.
[FIG. 6]

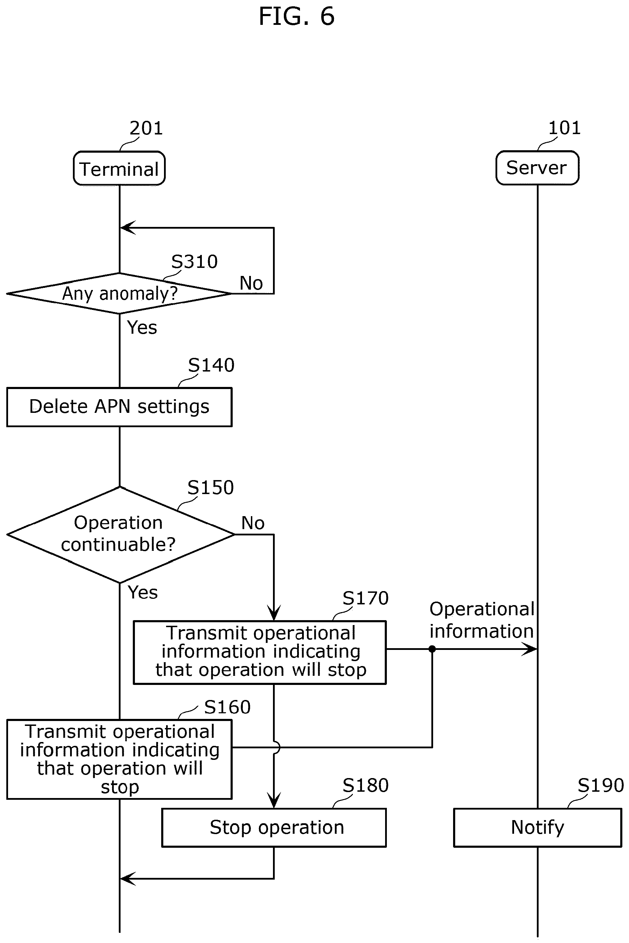

   FIG. 6 is a sequence diagram showing the processing procedure of the information processing system according to the variation of the embodiment.

### [Description of Embodiment]

Hereinafter, a certain exemplary embodiment is described in greater detail with reference to the accompanying Drawings.

The exemplary embodiment described below shows a general or specific example. The numerical values, shapes, materials, elements, the arrangement and connection of the elements, steps, the processing order of the steps etc. shown in the following exemplary embodiment are mere examples, and thus do not limit the scope of the present disclosure. Therefore, among the elements in the following exemplary embodiment, those not recited in any one of the independent claims are described as optional elements. Also note that the drawings are not always exactly illustrated. The same reference signs are assigned to substantially the same elements throughout the drawings, and overlapping descriptions can be omitted or simplified.

### [Embodiment]

### [Configuration]

First, the configuration of an information processing system according to an embodiment is described.

FIG. 1 is a diagram showing the configuration of information processing system 10 according to the embodiment.

Information processing system 10 includes server 100 and one or more terminals 200. Server 100 is an example of the information processing device. Terminal 200 is an example of the information terminal.

Server 100 is a computer that communicates with terminal 200. For example, server 100 communicates with terminal 200 via a base station owned by, for example, a cellular carrier. The base station communicates with terminal 200, for example, over a cellular communication network.

The cellular communication network, which is a wireless communication network, is a communication network including a data communication network and a voice communication network. The data communication network is a communication network for performing data transmission and reception. The voice communication network is a communication network for performing voice communication. The voice communication network is used, for example, for voice transmission and reception in voice calls and message transmission and reception that utilizes, for example, Short Message Service (SMS).

Terminal 200 includes a device, such as a Subscriber Identity Module (SIM), for performing communication over the cellular communication network (such communication is hereinafter simply referred to also as "cellular communication"), and performs cellular communication with the base station, using such device.

Also, for example, server 100 is communicably connected to the base station via, for example, the Internet. The base station transfers information received from terminal 200 via cellular communication to server 100, and transfers, via cellular communication, information received from server 100 via the Internet to terminal 200.

Note that information processing system 10 is simply required to include at least one terminal 200, and thus may either include a single terminal 200 or a plurality of terminals 200.

FIG. 2 is a block diagram showing the functional configuration of information processing system 10 according to the embodiment. Note that FIG. 2 omits the illustration of the base station owned by the cellular carrier. Also, only one terminal 200 included in information processing system 10 is shown in the diagram. As described above, server 100 and terminal 200 indirectly perform cellular communication (more specifically, communication including cellular communication) via, for example, the base station. Communication performed between server 100 and terminal 200 is simply required to be cellular communication at least partially.

Server 100 is a computer that communicates with terminal 200. Server 100 is, for example, a computer such as a personal computer or a tablet terminal. Server 100 is realized, using, for example, a communication interface for communicating with terminal 200, a non-volatile memory storing programs, a volatile memory serving as a temporary storage region for executing a program, input/output ports for signal transmission and reception, a processor for executing programs, etc. The communication interface may be realized in the form of, for example, a connector to which a communication line is connected to enable wired communication for communicating with the base station. Alternatively, the communication interface may be realized in the form of, for example, an antenna and a wireless communication circuit to enable wireless communication for communicating with the base station. Server 100 may include, for example, an antenna and a wireless communication circuit capable of wireless communication for directly communicating with terminal 200.

Server 100 includes communicator 110, detector 120, controller 130, notifier 140, and storage 150.

Communicator 110 is a communication interface for communicating with terminal 200. More specifically, communicator 110 communicates with terminal 200 via the base station. Communicator 110 may be realized in the form of, for example, a connector to which the communication line is connected to enable wired communication for communicating with the base station. Alternatively, communicator 110 may be realized in the form of, for example, an antenna and a wireless communication circuit to enable wireless communication for communicating with the base station.

Detector 120 is a processing unit that detects an anomaly of terminal 200. Detector 120 obtains status information indicating the status of terminal 200 from terminal 200 via communicator 110, and detects an anomaly of terminal 200 on the basis of the status information. The status information includes, for example, information showing a list of processes executed on terminal 200, information indicating the communication amount of communication performed by terminal 200, and/or information showing a list of sources and destinations of communication that communicated with terminal 200. The anomaly detection processing performed by detector 120 is described in detail later.

Controller 130 is a processing unit that transmits a deletion command to terminal 200, when an anomaly of terminal 200 is detected, for disconnecting communication that is performed over the data communication network in the cellular communication network (such communication is hereinafter simply referred to also as "data communication") by deleting Access Point Name (APN) settings. More specifically, controller 130 transmits the deletion command to terminal 200 via communicator 110, thereby causing the APN settings stored in terminal 200 to be deleted, when detector 120 detects an anomaly of terminal 200.

The APN settings are information items for performing data communication. The APN settings are information items including, for example, the address, the user's name, the password, and the provider's name for performing data communication. Controller 130 causes these information items stored in terminal 200 to be deleted, using the deletion command, to cause terminal 200 not to be able to perform data communication.

Note that the deletion command may be transmitted via data communication or voice communication.

Notifier 140 is a processing unit that provides notification about anomaly information related to an anomaly of terminal 200, on the basis of operational information that is transmitted from terminal 200 over the voice communication network in the cellular communication network and that indicates the operational status of terminal 200, when such operational information is received after the deletion command is transmitted. In the following description, communication that is performed over the voice communication network is also referred to simply as "voice communication". For example, notifier 140 provides the anomaly information to the user such as the administrator of terminal 200, by transmitting, via communicator 110, the anomaly information to a computer used by such user to cause the anomaly information to be displayed on a display device such as a display connected to such computer.

The operational information is information indicating the operational status of terminal 200. The operational information is information indicating, for example, whether terminal 200 will be stopped or will continue to operate. The operational information may also be, for example, information indicating some of the functions to be stopped. The operational information may also include information indicating the type of an anomaly that has occurred.

The anomaly information is information related to an anomaly of terminal 200. The anomaly information is, for example, information indicating the urgency level of the countermeasures that should be taken by the user against the anomaly of terminal 200. The urgency level may be freely defined. For example, the anomaly information includes information indicating, for example, "urgency level: low" when terminal 200 will continue to operate, and includes information indicating, for example, "urgency level: high" when terminal 200 will stop operating. The anomaly information may also be, for example, information indicating the type of terminal 200, such as that terminal 200 is a fuel cell or that terminal 200 is a household appliance. The anomaly information may also include information indicating the type of an anomaly that has occurred.

Note that the notification about the anomaly information may be provided using any methods, such as by means of image or voice. Notifier 140 may transmit image data serving as the anomaly information to the computer used by the user, or may transmit voice data serving as the anomaly information to the computer used by the user.

The processing units such as detector 120, controller 130, and notifier 140 are realized, for example, using a control program stored in storage 150 and a processor such as a central processing unit (CPU) that executes such control program.

Storage 150 is a storage device that stores the control program executed by each of the processing units included in server 100, and information such as a whitelist used by detector 120 for anomaly detection. Storage 150 is realized in the form of, for example, a semiconductor memory or a hard disk drive (HDD).

Terminal 200 is a device that performs communication over the cellular communication network. Terminal 200 may be any devices that perform cellular communication. Examples of terminal 200 include a device, such as a fuel cell for charging a device, which is not usually operated by the user such as the administrator after installation.

Terminal 200 includes communicator 210, monitoring unit 220, communication disconnector 230, communication controller 240, operator 250, and storage 260.

Communicator 210 is a communication interface for communicating with server 100 via cellular communication. More specifically, communicator 210 communicates with server 100 via the base station. Communicator 210 includes a wireless communication module such as a SIM for communicating with the base station via cellular communication. Note that communicator 210 may also include a communication module for directly performing data communication with server 100.

Monitoring unit 220 is a processing unit that monitors the status of terminal 200. More specifically, monitoring unit 220 obtains status information used by detector 120 to detect an anomaly of terminal 200. In the present example, monitoring unit 220 obtains information transmitted to server 100 as status information. Also, in the present example, monitoring unit 220 transmits status information to server 100 via communicator 210 at regular time intervals. Note that the timing at which status information is transmitted may be freely defined. The status information is transmitted, for example, using data communication.

Communication disconnector 230 is a processing unit that disconnects communication that is performed over the data communication network in the cellular communication network by deleting the APN settings, when an anomaly of terminal 200 is detected. In the present example, when receiving a deletion command transmitted from server 100 via communicator 210, communication disconnector 230 determines that an anomaly of terminal 200 has been detected and deletes the APN settings stored in storage 260.

Communication controller 240 is a processing unit that transmits operational information indicating the operational status of terminal 200 over the voice communication network in the cellular communication network, after communication over the data communication network is disconnected. More specifically, communication controller 240 transmits the operational information using voice communication, after communication disconnector 230 deletes the APN settings stored in storage 260.

When communication over the data communication network is disconnected, for example, communication controller 240 determines whether terminal 200 is operable. When determining that terminal 200 is operable, for example, communication controller 240 transmits operational information indicating that terminal 200 will continue to operate. Meanwhile, when determining that terminal 200 is not operable, for example, communication controller 240 transmits operational information indicating that terminal 200 will stop operating. Some of terminals 200 operate using information obtained via data communication. Communication controller 240 determines, for example, whether terminal 200 (more specifically, operator 250) is in operation using the information obtained via data communication. When terminal 200 is in operation using the information obtained via data communication, for example, communication controller 240 determines that terminal 200 is not operable. Meanwhile, when terminal 200 is in operation without using the information obtained via data communication, for example, communication controller 240 determines that terminal 200 is operable.

The operational information is transmitted from the information terminal, using, for example, Short Message Service (SMS). When determining that terminal 200 is operable, for example, communication controller 240 transmits, as operational information, a message indicating that terminal 200 will continue to operate, using SMS. Meanwhile, when determining that terminal 200 is not operable, communication controller 240 transmits, as operational information, a message indicating that terminal 200 will stop operating, using SMS.

Note that when terminal 200 is executing a plurality of processes, and some of these are in operation using the information obtained via data communication, while others are in operation without using such information, communication controller 240 may cause some of the operations to stop and the other operations to continue.

Operator 250 is an executing unit that performs a predetermined operation in terminal 200. In the case where terminal 200 is a fuel cell, for example, operator 250 includes a cell and a processing unit that controls charging and discharging of such cell. When communication over the data communication network is disconnected, for example, communication controller 240 determines whether terminal 200 is operable by determining whether operator 250 is operable.

The processing units such as monitoring unit 220, communication disconnector 230, communication controller 240, and operator 250, are realized, for example, using a control program stored in storage 260, and a processor such as a CPU that executes such control program.

Storage 260 is a storage device that stores, for example, the control program executed by each of the processing units included in terminal 200, and information such as the APN settings. Storage 260 is realized in the form of, for example, a semiconductor memory or an HDD.

### [Processing Procedure]

The following describes the processing procedure of information processing system 10.

FIG. 3 is a sequence diagram showing the processing procedure of information processing system 10 according to the embodiment.

First, terminal 200 repeatedly transmits status information to server 100 (S110). More specifically, monitoring unit 220 repeatedly obtains status information, and transmits the obtained status information to server 100 at regular time intervals. The status information is transmitted, for example, via data communication.

Server 100 repeatedly receives the status information repeatedly transmitted from terminal 200, and detects an anomaly of terminal 200 on the basis of the received status information. More specifically, detector 120 determines whether terminal 200 has an anomaly, on the basis of the status information (S120).

When determining that terminal 200 has no anomaly (No in S120), detector 120 repeatedly performs the determination of step S120, on the basis of the status information repeatedly transmitted from terminal 200.

When detector 120 is assumed to determine that terminal 200 has an anomaly (Yes in S120), server 100 (more specifically, controller 130) transmits a deletion command to terminal 200 (S130). The deletion command may be transmitted either via data communication or voice communication.

When receiving the deletion command, terminal 200 deletes the APN settings (S140). More specifically, communication disconnector 230 disconnects communication that is performed over the data communication network in the cellular communication network by deleting the APN settings stored in storage 260. Stated differently, terminal 200 becomes unable to perform data communication.

Next, terminal 200 determines whether it is possible for terminal 200 to continue to operate (S150). For example, communication controller 240 determines whether terminal 200 (e.g., operator 250) is operable, with data communication disconnected, that is, in standalone mode.

When determining that terminal 200 is operable (Yes in S150), communication controller 240 transmits, to server 100, operational information indicating that terminal 200 will continue to operate (S160). In this case, terminal 200 will continue to operate in standalone mode.

Meanwhile, when determining that terminal 200 is not operable (No in S150), communication controller 240 transmits operational information indicating that terminal 200 will stop operating (S170). Next, terminal 200 stops the operation and ends the processing (S180).

When receiving the operational information, server 100 provides notification about anomaly information related to an anomaly of terminal 200, on the basis of the operational information (S190). More specifically, notifier 140 notifies the user of the anomaly of terminal 200 by transmitting the anomaly information to, for example, the computer used by the user.

Note that, when an anomaly of terminal 200 is detected, server 100 may immediately transmit, to terminal 200, anomaly information indicating that an anomaly has occurred in terminal 200. Stated differently, server 100 may transmit anomaly information to terminal 200 before receiving operational information. In this case, in the case of further receiving operational information, server 100 may further transmit, to terminal 200, anomaly information that is based on the operational information (e.g., information indicating whether terminal 200 is continuing the operation).

FIG. 4 is a flowchart showing the processing procedure of anomaly detection processing performed by detector 120 according to the embodiment. More specifically, FIG. 4 is a flowchart showing a specific example of the process performed in step S120.

First, detector 120 determines whether a process other than predetermined processes is executed on terminal 200 (S210). Information such as a list of processes indicating the predetermined processes, for example, is preliminarily stored in storage 150. Also, for example, in step S110, monitoring unit 220 transmits, to server 100, status information including information indicating the process executed by terminal 200. For example, detector 120 obtains information indicating the process executed on terminal 200 and the list of processes to compare them, thereby determining whether a process other than the predetermined processes is executed on terminal 200.

Note that count information indicating the number of counts of terminal 200 executing a process, for example, may be preliminarily stored in storage 150. Also, in step S110, monitoring unit 220 may transmit, to server 100, status information including information indicating the number of counts of a process executed on terminal 200. Detector 120 may, for example, obtain the number of counts of a process executed on terminal 200 and the count information, and compare them to determine whether a process other than the predetermined processes is executed on terminal 200.

When determining that a process other than the predetermined processes is not executed on terminal 200 (No in S210), detector 120 determines whether the amount of information transmitted and received by terminal 200 (i.e., the communication amount in terminal 200) is greater than a predetermined communication amount (S220). For example, the number of packets required for communication performed by terminal 200 at regular time intervals is preliminarily stored in storage 150 as the predetermined communication amount. In step S110, for example, monitoring unit 220 transmits, to server 100, status information including information indicating the communication amount in terminal 200. Detector 120 obtains information indicating the communication amount in terminal 200 and information indicating the predetermined communication amount, and determines whether the communication amount of communication performed in terminal 200 deviates from such required number of packets.

When determining that the communication amount in terminal 200 is less than or equal to the predetermined communication amount (No in S220), detector 120 determines whether one or more communication devices (source or destination devices of communication) that communicated with terminal 200 include a communication device other than predetermined communication devices included in the whitelist (S230). For example, the whitelist indicating one or more predetermined communication devices is preliminarily stored in storage 150. The whitelist includes, for example, the IP addresses, the domains, the subnet masks, or the address ranges of communication devices to which terminal 200 can transmit data under normal conditions, as information indicating the predetermined communication devices. Also, in step S110, for example, monitoring unit 220 transmits, to server 100, status information including information indicating the communication devices that communicated with terminal 200. Detector 120 obtains, for example, the information indicating one or more communication devices that communicated with terminal 200 and the whitelist to compare them, thereby determining whether such one or more communication devices that communicated with terminal 200 include a communication device other than the predetermined communication devices included in the whitelist.

When determining that the one or more communication devices that communicated with terminal 200 do not include a communication device other than the predetermined communication devices included in the whitelist (No in S230), detector 120 determines that terminal 200 is normal (S240).

Meanwhile, when determining that a process other than the predetermined processes is executed on terminal 200 (Yes in S210), and that the communication amount in terminal 200 is greater than the predetermined communication amount (Yes in S220), or that the one or more communication devices that communicated with terminal 200 include a communication device other than the predetermined communication devices included in the whitelist (Yes in S230), detector 120 determines that terminal 200 is anomalous (S250).

As described above, for example, detector 120 detects, as an anomaly of terminal 200, the case where a process other than the predetermined processes is executed on terminal 200. Also, for example, detector 120 detects, as an anomaly of terminal 200, the case where the communication amount of communication performed by terminal 200 is not the predetermined communication amount. Also, for example, detector 120 detects, as an anomaly of terminal 200, the case where a communication device that communicated with terminal 200 is not included in the predetermined communication devices.

Note that step S210 through step S230 may be performed in any order.

Also, step S210 through step S230 may all be performed, and the type of the anomaly that has occurred in terminal 200 may be transmitted to server 100 as operational information.

In step S220, detector 120 may determine, as anomalous, the case where the communication amount in terminal 200 is less than the predetermined communication amount, or may determine, as normal, the case where the communication amount in terminal 200 is within the range of the predetermined communication amount, and determine, as anomalous, the case where the communication amount in terminal 200 is not within the range of the predetermined communication amount.

Also, when a communication method other than cellular communication is available in terminal 200, for example, in step S220, the communication amount in cellular communication may be determined, or the communication amounts of all communication performed by terminal 200 may be determined.

When a communication method other than cellular communication is available in terminal 200, for example, in step S230, a communication device that communicated with terminal 200 via cellular communication may be determined, or all communication devices that communicated with terminal 200 may be determined.

Also, storage 150 may also store, for example, a blacklist indicating one or more predetermined communication devices. Detector 120 may determine whether one or more communication devices that communicated with terminal 200 include any one of the predetermined communication devices included in the blacklist. In this case, when the one or more communication devices that communicated with terminal 200 include any one of the predetermined communication devices included in the blacklist, for example, detector 120 determines that terminal 200 is anomalous.

### [Variation]

The following describes a variation of the information processing system according to an aspect of the present disclosure. In the variation, the terminal includes a detector.

In the description of the variation, the same reference signs are assigned to the same elements and the same processes as those of information processing system 10, and their descriptions can be partially simplified or omitted.

FIG. 5 is a block diagram showing the functional configuration of information processing system 11 according to a variation of the embodiment.

Information processing system 11 includes server 101 and one or more terminals 201. Server 101 is an example of the information processing device. Terminal 201 is an example of the information terminal.

Server 101 is a computer that communicates with terminal 201. For example, server 101 communicates with terminal 201 via a base station owned by, for example, a cellular carrier. The base station communicates with terminal 201, for example, over a cellular communication network.

Server 101 includes communicator 110, notifier 140, and storage 150. Different from server 100, server 101 does not include detector 120 and controller 130. Stated differently, server 101 does not detect an anomaly of terminal 201 and does not transmit a deletion command to terminal 201. For this reason, storage 150 does not need to store information used to detect an anomaly of terminal 201, such as a list of processes showing predetermined processes, information indicating a predetermined communication amount, and information such as a whitelist.

Notifier 140 provides notification about anomaly information related to an anomaly of terminal 201, on the basis of operational information that is transmitted from terminal 201 over the voice communication network in the cellular communication network and that indicates the operational status of terminal 201, when such operational information is received.

Terminal 201 is a device that performs communication over the cellular communication network.

Terminal 201 includes communicator 210, monitoring unit 220, communication disconnector 230, communication controller 240, operator 250, storage 260, and detector 270. Different from terminal 200, terminal 201 includes detector 270. Stated differently, terminal 201 detects an anomaly of terminal 201 on its own.

Monitoring unit 220 is a processing unit that monitors the status of terminal 201. More specifically, monitoring unit 220 obtains status information used by detector 270 to detect an anomaly of terminal 201. Note that monitoring unit 220 may not transmit the status information to server 101.

Communication disconnector 230 disconnects communication that is performed over the data communication network in the cellular communication network by deleting the APN settings, when an anomaly of terminal 201 is detected. In the present example, communication disconnector 230 deletes the APN settings stored in storage 260, when detector 270 detects an anomaly of terminal 201.

Storage 260 is a storage device that stores, for example, a control program executed by each of the processing units included in terminal 201, and information such as the APN settings. In the present example, storage 260 stores the control program executed by detector 270, and information used for detecting an anomaly of terminal 201, such as a list of processes showing predetermined processes, information indicating a predetermined communication amount, and information such as a whitelist.

Detector 270 is a processing unit that detects an anomaly of terminal 201. In the same manner as that of detector 120, for example, detector 270 detects an anomaly of terminal 201 by performing the anomaly detection processing shown in FIG. 4. For example, detector 270 detects, as an anomaly of terminal 201, the case where a process other than the predetermined processes is executed on terminal 201. Also, for example, detector 270 detects, as an anomaly of terminal 201, the case where the communication amount of the communication performed by terminal 201 is not the predetermined communication amount. Also, for example, detector 270 detects, as an anomaly of terminal 201, the case where the communication device that communicated with terminal 201 is not included in the predetermined communication devices.

Detector 270 is realized, for example, using the control program stored in storage 260 and a processor such as a CPU that executes such control program.

As described above, terminal 201 further includes, for example, detector 270 that detects an anomaly of terminal 201. Communication disconnector 230 deletes the APN settings when detector 270 detects an anomaly of terminal 201.

FIG. 6 is a sequence diagram showing the processing procedure of information processing system 11 according to a variation of the embodiment.

First, monitoring unit 220 repeatedly obtains status information. Next, detector 270 determines whether terminal 201 has an anomaly, on the basis of the status information (S310).

When determining that terminal 201 has no anomaly (No in S310), detector 270 repeatedly performs the determination of step S310 on the basis of the status information repeatedly obtained by monitoring unit 220.

Meanwhile, when detector 270 determines that terminal 201 has an anomaly (Yes in S310), communication disconnector 230 disconnects communication that is performed over the data communication network in the cellular communication network by deleting the APN settings stored in storage 260 (S140). Stated differently, terminal 201 becomes unable to perform data communication.

In step S140 and thereafter, terminal 201 and server 101 perform the same processes as those performed by terminal 200 and server 100 shown in FIG. 3, for example, to notify the user of an anomaly of terminal 201.

### [Effects, etc.]

The following shows example techniques achieved from the descriptions disclosed by this DESCRIPTION, and describes effects, etc. achieved from such example techniques.

Technique 1 is an information terminal that performs communication over a cellular communication network, the information terminal including: communication disconnector 230 that disconnects communication that is performed over a data communication network in the cellular communication network by deleting Access Point Name (APN) setting, when an anomaly of the information terminal is detected; and communication controller 240 that transmits operational information indicating an operational status of the information terminal over a voice communication network in the cellular communication network, after the communication over the data communication network is disconnected.

The information terminal is, for example, terminal 200 or terminal 201.

In the case where an IoT device such as an information terminal is maliciously used as a jump server for spreading viruses to other devices due to, for example, virus infection, there is a possibility that data such as viruses will be transmitted to other devices via communication over a data communication network, causing a secondary damage. In view of this, when an anomaly occurs, such as when an information terminal has become virus-infected, it is possible to reduce the possibility of the occurrence of a secondary damage by promptly disconnecting the communication performed over the data communication network. In the case of an IoT device, however, when the communication function is stopped to prevent a secondary damage after an anomaly is detected, the only means to notify the user of the anomaly is through physical means, such as a display device or an indicator included in the IoT device. However, in the case where the information terminal is a device that is not frequently checked by the user, and when such information terminal disconnects the communication performed over the data communication network, for example, there is a possibility that the user fails to notice that the communication has been disconnected. Some of the information terminals operate by performing communication over the data communication network at regular time intervals. When communication over the data communication network is disconnected, a device of such type will stop operating, resulting in a possibility that the user fails to notice that the device has stopped operating.

In view of this, when an anomaly of an information terminal is detected that performs communication over a cellular communication network including independent data communication network (data line) and voice communication network (call line), communication over the data communication network is disabled by deleting the APN settings used particularly for communication that is performed over the data communication network, among communication performed over the cellular communication network. Furthermore, the information terminal outputs operational information (i.e., alert) to the user via communication over the voice communication network (stated differently, SMS or voice signal that utilizes the voice communication line).

With this, even after the information terminal has disconnected communication performed over the data communication network, it is possible for the user to know the operational status of the information terminal such as whether the information terminal is continuing the operation from the operational information transmitted via communication performed over the voice communication network. Thus, with the information terminal according to an aspect of the present disclosure, it is possible to reduce the occurrence of a secondary damage attributable to communication performed by the information terminal and facilitate the notification of the operational status of the information terminal.

The information terminal of Technique 2 according to an aspect of the present disclosure is the information terminal according to Technique 1, including detector 270 that detects an anomaly of the information terminal, wherein communication disconnector 230 deletes the APN setting, when detector 270 detects the anomaly of the information terminal.

With this, it is possible for the information terminal to detect an anomaly of such information terminal. Thus, when an anomaly of the information terminal is detected, it is possible to promptly disconnect communication performed over the data communication network.

The information terminal of Technique 3 is the information terminal according to Technique 2, wherein detector 270 detects, as the anomaly of the information terminal, a case where a process other than a predetermined process is executed on the information terminal.

With this, it is possible for the information terminal to appropriately detect an anomaly of the information terminal.

The information terminal of Technique 4 is the information terminal according to Technique 2 or 3, wherein detector 270 detects, as the anomaly of the information terminal, a case where a communication amount of communication performed by the information terminal is not a predetermined communication amount.

With this, it is possible for the information terminal to appropriately detect an anomaly of the information terminal.

The information terminal of Technique 5 is the information terminal according to any one of Techniques 2 to 4, wherein detector 270 detects, as the anomaly of the information terminal, a case where a communication device that communicated with the information terminal is not a predetermined communication device.

With this, it is possible for the information terminal to appropriately detect an anomaly of the information terminal.

The information terminal of Technique 6 is the information terminal according to any one of Techniques 1 to 5, wherein the information terminal transmits the operational information, using a Short Message Service (SMS).

With this, it is possible for the information terminal to notify the user of the operational status of the information terminal, using communication that is performed over the voice communication network.

The information terminal of Technique 7 is the information terminal according to any one of Techniques 1 to 6, wherein communication controller 240: determines whether the information terminal is operable, when the communication over the data communication network is disconnected; transmits the operational information indicating that the information terminal will continue to operate, when communication controller 240 determines that the information terminal is operable; and transmits the operational information indicating that the information terminal will stop operating, when communication controller 240 determines that the information terminal is not operable.

Depending on the type, some information terminals are capable of continuing the operation even without performing communication over the data communication network. In view of this, when determined to be operable, the information terminal continues to operate and transmits operational information indicating that the information terminal will continue to operate. Meanwhile, when determined not to be operable, the information terminal transmits operational information indicating that the information terminal will stop operating, and stops the operation. With this, it is possible to prevent the information terminal from unnecessarily stopping the operation.

Technique 8 is an information processing device including: controller 130 that transmits a deletion command to an information terminal that performs communication over a cellular communication network, when an anomaly of the information terminal is detected, the deletion command being a command for disconnecting communication that is performed over a data communication network in the cellular communication network by deleting Access Point Name (APN) setting; and notifier 140 that provides notification about anomaly information related to the anomaly of the information terminal, based on operational information that is transmitted from the information terminal over a voice communication network in the cellular communication network and indicates an operational status of the information terminal, when the operational information is received after the deletion command is transmitted.

The information processing device is, for example, server 100.

With this, when an anomaly of the information terminal is detected, it is possible for the information processing device to disable communication that is performed over the data communication network by causing the APN settings of the information terminal to be deleted, and to notify the user of the operational information transmitted from the information terminal over the voice communication network. Thus, with the information processing device according to an aspect of the present disclosure, it is possible to reduce the occurrence of a secondary damage attributable to communication performed by the information terminal, and facilitate the notification of the operational status of the information terminal.

Technique 9 is an information processing method performed by an information terminal that performs communication over a cellular communication network, the information processing method including: disconnecting communication that is performed over a data communication network in the cellular communication network by deleting Access Point Name (APN) setting, when an anomaly of the information terminal is detected (S140); and transmitting operational information indicating an operational status of the information terminal over a voice communication network in the cellular communication network, after the communication over the data communication network is disconnected (S160 or S170).

With this, it is possible to achieve the same effects as those of the information terminal according to an aspect of the present disclosure.

Technique 10 is a program for causing a computer to execute the information processing method according to Technique 9.

With this, it is possible to achieve the same effects as those of the information terminal according to an aspect of the present disclosure.

Technique 11 is an information processing method performed by an information processing device, the information processing method including: transmitting a deletion command to an information terminal that performs communication over a cellular communication network, when an anomaly of the information terminal is detected (Yes in S120), the deletion command being a command for disconnecting communication that is performed over a data communication network in the cellular communication network by deleting Access Point Name (APN) setting (S130); and providing notification about anomaly information related to the anomaly of the information terminal, based on operational information that is transmitted from the information terminal over a voice communication network in the cellular communication network and indicates an operational status of the information terminal, when the operational information is received after the deletion command is transmitted (S190).

With this, it is possible to achieve the same effects as those of the information processing device according to an aspect of the present disclosure.

Technique 12 is a program for causing a computer to execute the information processing method according to Technique 11.

With this, it is possible to achieve the same effects as those of the information processing device according to an aspect of the present disclosure.

### [Other Embodiments]

The embodiment has been described above, but the present disclosure is not limited to such embodiment.

For example, both the server and the terminal may include a detector. In this case, for example, the monitoring unit may transmit status information to the server. Also, in this case, the server may also include a controller. When both the server and the terminal include a detector, for example, the server and the terminal may perform the same anomaly detection processing, or may perform different anomaly detection processing.

Also, in the configuration in which the server transmits a deletion command to the terminal as in the foregoing embodiment, the server may include a detector or may not include a detector. In this case, for example, the server may obtain the detection results on the anomaly of the terminal from a computer not shown in the diagram. Also, in this case, the terminal may, for example, transmit status information to such computer. Also, in this case, the server may, for example, transfer, to such computer, the status information received from the terminal.

Also, for example, the terminal may include a detector and transmit the detection results to the server, and the server may determine whether to transmit a deletion command, on the basis of the received detection results. In this case, the terminal may determine whether to delete the APN settings, on the basis of whether the terminal has received the deletion command.

As described above, the elements and the processes of the foregoing embodiment and its variation may be freely combined.

For example, the anomaly detection processing performed by detector 270 may be performed by detector 120. The following shows example techniques that are achieved from the descriptions disclosed by this DESCRIPTION.

The information processing device of Technique 13 according to an aspect of the present disclosure is the information processing device according to Technique 8, wherein the information processing device further includes detector 120 that detects an anomaly of the information terminal, and controller 130 transmits a deletion command to the information terminal, when detector 120 detects an anomaly of the information terminal.

With this, it is possible for the information processing device to detect an anomaly of the information terminal. Thus, when an anomaly of the information terminal has been detected, it is possible to promptly disconnect communication that is performed over the data communication network.

Technique 14 is the information processing device according to Technique 13, wherein detector 120 detects, as the anomaly of the information terminal, a case where a process other than a predetermined process is executed on the information terminal.

With this, it is possible for the information processing device to appropriately detect an anomaly of the information terminal.

Technique 15 is the information terminal according to Technique 13 or 14, wherein detector 120 detects, as the anomaly of the information terminal, a case where a communication amount of communication performed by the information terminal is not a predetermined communication amount.

With this, it is possible for the information processing device to appropriately detect an anomaly of the information terminal.

Technique 16 is the information terminal according to any one of Techniques 13 to 15, wherein detector 120 detects, as the anomaly of the information terminal, a case where a communication device that communicated with the information terminal is not a predetermined communication device.

With this, it is possible for the information processing device to appropriately detect an anomaly of the information terminal.

Technique 17 is the information terminal according to any one of Technique 8, and Techniques 13 to 16, wherein the information terminal transmits the operational information, using SMS.

With this, it is possible for the information processing device to obtain the operational status of the information terminal transmitted via communication over the voice communication network and notify the user of it.

Also, for example, the server and the terminal described in the foregoing embodiment may be realized in the form of a single device that includes all the elements of each of the server and the terminal, or may be realized in the form of a plurality of devices to which the functions are allocated and which operate in conjunction with each other.

Also, in the foregoing embodiment, a process performed by a specified processing unit may be performed by another processing unit. Also, the processing order of a plurality of processes may be changed, and a plurality of processes may be performed in parallel.

Also, in the foregoing embodiment, each of the elements may be realized by executing a software program suitable for the element. Each of the elements may be realized by means of a program executing unit, such as a CPU and a processor, reading and executing the software program recorded on a recording medium such as a hard disk or a semiconductor memory.

Also, each of the elements may be realized in the form of a hardware product. Each of the elements may be, for example, a circuit (or integrated circuit). These circuits may form a single circuit as a whole, or in the form of individual circuits. Each of the circuits may be a general-purpose circuit or an exclusive circuit.

These general or specific aspects of the present disclosure may be implemented using a device, a system, a method, an integrated circuit, a computer program, or a non-transitory recording medium such as a computer-readable CD-ROM. These general or specific aspects of the present disclosure may also be implemented using any combination of devices, systems, methods, integrated circuits, computer programs, or recording media.

The present disclosure also includes an embodiment achieved by making various modifications to each embodiment that can be conceived by those skilled in the art or an embodiment achieved by freely combining elements and functions in each embodiment, without departing from the essence of the present disclosure.

### [Industrial Applicability]

The present disclosure is useable as, for example, an IoT device or a server that communicates with an IoT device.

### [Reference Signs List]

10, 11 information processing system
100, 101 server
110, 210 communicator
120, 270 detector
130 controller
140 notifier
150, 260 storage
200, 201 terminal
220 monitoring unit
230 communication disconnector
240 communication controller
250 operator

## Claims

1. An information terminal that performs communication over a cellular communication network, the information terminal comprising:
a communication disconnector that disconnects communication that is performed over a data communication network in the cellular communication network by deleting Access Point Name (APN) setting, when an anomaly of the information terminal is detected; and
a communication controller that transmits operational information indicating an operational status of the information terminal over a voice communication network in the cellular communication network, after the communication over the data communication network is disconnected.

2. The information terminal according to claim 1, further comprising:
a detector that detects an anomaly of the information terminal,
wherein the communication disconnector deletes the APN setting, when the detector detects the anomaly of the information terminal.

3. The information terminal according to claim 2,
wherein the detector detects, as the anomaly of the information terminal, a case where a process other than a predetermined process is executed on the information terminal.

4. The information terminal according to claim 2,
wherein the detector detects, as the anomaly of the information terminal, a case where a communication amount of communication performed by the information terminal is not a predetermined communication amount.

5. The information terminal according to claim 2,
wherein the detector detects, as the anomaly of the information terminal, a case where a communication device that communicated with the information terminal is not a predetermined communication device.

6. The information terminal according to claim 1,
wherein the information terminal transmits the operational information, using a Short Message Service (SMS).

7. The information terminal according to any one of claims 1 to 6,
wherein the communication controller:
determines whether the information terminal is operable, when the communication over the data communication network is disconnected;
transmits the operational information indicating that the information terminal will continue to operate, when the communication controller determines that the information terminal is operable; and
transmits the operational information indicating that the information terminal will stop operating, when the communication controller determines that the information terminal is not operable.

8. An information processing device comprising:
a controller that transmits a deletion command to an information terminal that performs communication over a cellular communication network, when an anomaly of the information terminal is detected, the deletion command being a command for disconnecting communication that is performed over a data communication network in the cellular communication network by deleting Access Point Name (APN) setting; and
a notifier that provides notification about anomaly information related to the anomaly of the information terminal, based on operational information that is transmitted from the information terminal over a voice communication network in the cellular communication network and indicates an operational status of the information terminal, when the operational information is received after the deletion command is transmitted.

9. An information processing method performed by an information terminal that performs communication over a cellular communication network, the information processing method comprising:
disconnecting communication that is performed over a data communication network in the cellular communication network by deleting Access Point Name (APN) setting, when an anomaly of the information terminal is detected; and
transmitting operational information indicating an operational status of the information terminal over a voice communication network in the cellular communication network, after the communication over the data communication network is disconnected.

10. A program for causing a computer to execute the information processing method according to claim 9.

11. An information processing method performed by an information processing device, the information processing method comprising:
transmitting a deletion command to an information terminal that performs communication over a cellular communication network, when an anomaly of the information terminal is detected, the deletion command being a command for disconnecting communication that is performed over a data communication network in the cellular communication network by deleting Access Point Name (APN) setting; and
providing notification about anomaly information related to the anomaly of the information terminal, based on operational information that is transmitted from the information terminal over a voice communication network in the cellular communication network and indicates an operational status of the information terminal, when the operational information is received after the deletion command is transmitted.

12. A program for causing a computer to execute the information processing method according to claim 11.

## Patentansprüche

1. Informationsendgerät, das Kommunikation über ein Mobilkommunikationsnetz durchführt, wobei das Informationsendgerät umfasst:
einen Kommunikationstrenner, der eine Kommunikation, die über ein Datenkommunikationsnetz im Mobilkommunikationsnetz durch Löschen der Access-Point-Name-(APN-)Einstellung trennt, wenn eine Anomalie des Informationsendgeräts erfasst wird; und
ein Kommunikationssteuergerät, das Betriebsinformationen zur Angabe eines Betriebsstatus des Informationsendgeräts über ein Sprachkommunikationsnetz im Mobilkommunikationsnetz sendet, nachdem die Kommunikation über das Datenkommunikationsnetz getrennt wurde.

2. Informationsendgerät nach Anspruch 1, ferner umfassend:
einen Detektor, der eine Anomalie des Informationsendgeräts erfasst,
wobei der Kommunikationstrenner die APN-Einstellung löscht, wenn der Detektor die Anomalie des Informationsendgeräts erfasst.

3. Informationsendgerät nach Anspruch 2, wobei der Detektor als die Anomalie des Informationsendgeräts einen Fall erfasst, bei dem auf dem Informationsendgerät ein anderer als ein vorbestimmter Prozess ausgeführt wird.

4. Informationsendgerät nach Anspruch 2, wobei der Detektor als die Anomalie des Informationsendgeräts einen Fall erfasst, bei dem eine Kommunikationsmenge von durch das Informationsendgerät durchgeführter Kommunikation nicht eine vorbestimmte Kommunikationsmenge ist.

5. Informationsendgerät nach Anspruch 2, wobei der Detektor als die Anomalie des Informationsendgeräts einen Fall erfasst, bei dem eine Kommunikationsvorrichtung, die mit dem Informationsendgerät kommuniziert hat, nicht eine vorbestimmte Kommunikationsvorrichtung ist.

6. Informationsendgerät nach Anspruch 1, wobei das Informationsendgerät die Betriebsinformationen unter Verwendung eines Short Message Service (SMS) sendet.

7. Informationsendgerät nach einem der Ansprüche 1 bis 6, wobei das Kommunikationssteuergerät:
bestimmt, ob das Informationsendgerät betriebsbereit ist, wenn die Kommunikation über das Datenkommunikationsnetz getrennt ist;
die Betriebsinformationen zur Angabe sendet, dass das Informationsendgerät den Betrieb fortsetzt, wenn das Kommunikationssteuergerät bestimmt, dass das Informationsendgerät betriebsbereit ist; und
die Betriebsinformationen zur Angabe sendet, dass das Informationsendgerät den Betrieb beendet, wenn das Kommunikationssteuergerät bestimmt, dass das Informationsendgerät nicht betriebsbereit ist.

8. Informationsverarbeitungsvorrichtung, umfassend:
ein Steuergerät, das einen Löschbefehl an ein Informationsendgerät sendet, das Kommunikation über ein Mobilkommunikationsnetz durchführt, wenn eine Anomalie des Informationsendgeräts erfasst wird, wobei der Löschbefehl ein Befehl zum Trennen der Kommunikation, die über ein Datenkommunikationsnetz im Mobilkommunikationsnetz durchgeführt wird, durch Löschen der Access-Point-Name-(APN-) Einstellung ist; und
einen Benachrichtiger, der eine Benachrichtigung über Anomalieinformationen in Bezug auf die Anomalie des Informationsendgeräts basierend auf Betriebsinformationen, die vom Informationsendgerät über ein Sprachkommunikationsnetz im Mobilkommunikationsnetz gesendet werden, bereitstellt und einen Betriebsstatus des Informationsendgeräts angibt, wenn die Betriebsinformationen nach dem Senden des Löschbefehls empfangen werden.

9. Von einem Informationsendgerät, das Kommunikation über ein Mobilkommunikationsnetz durchführt, durchgeführtes Informationsverarbeitungsverfahren, wobei das Informationsverarbeitungsverfahren umfasst:
Trennen der Kommunikation, die über ein Datenkommunikationsnetz im Mobilkommunikationsnetz durchgeführt wird, durch Löschen der Access-Point-Name-(APN-) Einstellung, wenn eine Anomalie des Informationsendgeräts erfasst wird; und
Senden von Betriebsinformationen zur Angabe eines Betriebsstatus des Informationsendgeräts über ein Sprachkommunikationsnetz im Mobilkommunikationsnetz, nachdem die Kommunikation über das Datenkommunikationsnetz getrennt wurde.

10. Programm zum Veranlassen eines Computers zum Ausführen des Informationsverarbeitungsverfahrens nach Anspruch 9.

11. Durch eine Informationsverarbeitungsvorrichtung ausgeführtes Informationsverarbeitungsverfahren, wobei das Informationsverarbeitungsverfahren umfasst:
Senden eines Löschbefehls an ein Informationsendgerät, das Kommunikation über ein Mobilkommunikationsnetz durchführt, wenn eine Anomalie des Informationsendgeräts erfasst wird, wobei der Löschbefehl ein Befehl zum Trennen der Kommunikation, die über ein Datenkommunikationsnetz im Mobilkommunikationsnetz durchgeführt wird, durch Löschen der Access-Point-Name-(APN-)Einstellung ist; und
Bereitstellen einer Benachrichtigung über Anomalieinformationen in Bezug auf die Anomalie des Informationsendgeräts basierend auf Betriebsinformationen, die vom Informationsendgerät über ein Sprachkommunikationsnetz im Mobilkommunikationsnetz gesendet werden, und Angeben eines Betriebsstatus des Informationsendgeräts, wenn die Betriebsinformationen nach dem Senden des Löschbefehls empfangen werden.

12. Programm zum Veranlassen eines Computers zum Ausführen des Informationsverarbeitungsverfahrens nach Anspruch 11.

## Revendications

1. Terminal d'informations qui effectue une communication sur un réseau de communication cellulaire, le terminal d'informations comprenant :
un déconnecteur de communication qui déconnecte une communication qui est effectuée sur un réseau de communication de données dans le réseau de communication cellulaire en supprimant un paramétrage de nom de point d'accès (APN), lorsqu'une anomalie du terminal d'informations est détectée ; et
un dispositif de commande de communication qui transmet des informations opérationnelles indiquant un état opérationnel du terminal d'informations sur un réseau de communication vocale dans le réseau de communication cellulaire, après déconnexion de la communication sur le réseau de communication de données.

2. Terminal d'informations selon la revendication 1, comprenant en outre :
un détecteur qui détecte une anomalie du terminal d'informations,
dans lequel le déconnecteur de communication supprime le paramétrage APN, lorsque le détecteur détecte l'anomalie du terminal d'informations.

3. Terminal d'informations selon la revendication 2,
dans lequel le détecteur détecte, comme anomalie du terminal d'informations, un cas où un processus autre qu'un processus prédéterminé est exécuté sur le terminal d'informations.

4. Terminal d'informations selon la revendication 2,
dans lequel le détecteur détecte, comme anomalie du terminal d'informations, un cas où une quantité de communication d'une communication effectuée par le terminal d'informations n'est pas une quantité de communication prédéterminée.

5. Terminal d'informations selon la revendication 2,
dans lequel le détecteur détecte, comme anomalie du terminal d'informations, un cas où un dispositif de communication ayant communiqué avec le terminal d'informations n'est pas un dispositif de communication prédéterminé.

6. Terminal d'informations selon la revendication 1,
dans lequel le terminal d'informations transmet les informations opérationnelles, en utilisant un service de messages courts (SMS).

7. Terminal d'informations selon l'une quelconque des revendications 1 à 6,
dans lequel le dispositif de commande de communication :
détermine si le terminal d'informations peut fonctionner, lorsque la communication sur le réseau de communication de données est déconnectée ;
transmet les informations opérationnelles indiquant que le terminal d'informations continuera à fonctionner, lorsque le dispositif de commande de communication détermine que le terminal d'informations peut fonctionner ; et
transmet les informations opérationnelles indiquant que le terminal d'informations cessera de fonctionner, lorsque le dispositif de commande de communication détermine que le terminal d'informations ne peut pas fonctionner.

8. Dispositif de traitement d'informations comprenant :
un dispositif de commande qui transmet une instruction de suppression à un terminal d'informations qui effectue une communication sur un réseau de communication cellulaire, lorsqu'une anomalie du terminal d'informations est détectée, l'instruction de suppression étant une instruction destinée à déconnecter une communication qui est effectuée sur un réseau de communication de données dans le réseau de communication cellulaire en supprimant un paramétrage de nom de point d'accès (APN) ; et
un notificateur qui fournit une notification concernant des informations d'anomalie relatives à l'anomalie du terminal d'informations, sur la base d'informations opérationnelles qui sont transmises par le terminal d'informations sur un réseau de communication vocale dans le réseau de communication cellulaire et indiquent un état opérationnel du terminal d'informations, lorsque les informations opérationnelles sont reçues après la transmission de l'instruction de suppression.

9. Procédé de traitement d'informations effectué par un terminal d'informations qui effectue une communication sur un réseau de communication cellulaire, le procédé de traitement d'informations comprenant les étapes consistant à :
déconnecter une communication qui est effectuée sur un réseau de communication de données dans le réseau de communication cellulaire en supprimant un paramétrage de nom de point d'accès (APN), lorsqu'une anomalie du terminal d'informations est détectée ; et
transmettre des informations opérationnelles indiquant un état opérationnel du terminal d'informations sur un réseau de communication vocale dans le réseau de communication cellulaire, après la déconnexion de la communication sur le réseau de communication de données.

10. Programme pour amener un ordinateur à exécuter le procédé de traitement d'informations selon la revendication 9.

11. Procédé de traitement d'informations effectué par un dispositif de traitement d'informations, le procédé de traitement d'informations comprenant les étapes consistant à :
transmettre une instruction de suppression à un terminal d'informations qui effectue une communication sur un réseau de communication cellulaire, lorsqu'une anomalie du terminal d'informations est détectée, l'instruction de suppression étant une instruction destinée à déconnecter une communication qui est effectuée sur un réseau de communication de données dans le réseau de communication cellulaire en supprimant un paramétrage de nom de point d'accès (APN) ; et
fournir une notification concernant des informations d'anomalie relatives à l'anomalie du terminal d'informations, sur la base d'informations opérationnelles qui sont transmises par le terminal d'informations via un réseau de communication vocale dans le réseau de communication cellulaire et indiquent un état opérationnel du terminal d'informations, lorsque les informations opérationnelles sont reçues après la transmission de l'instruction de suppression.

12. Programme pour amener un ordinateur à exécuter le procédé de traitement d'informations selon la revendication 11.
